# EUROPÄISCHE PATENTSCHRIFT

(11) **EP 2 340 704 B1**
(45) Veröffentlichungstag und Bekanntmachung des Hinweises auf die Patenterteilung: **16.11.2016**
(21) Anmeldenummer: 10195295.0
(22) Anmeldetag: 16.12.2010
(51) Int. Cl.: A01D 78/10, A01D 80/02

(54) **Rechen für einen Kreiselschwader**
Rake for a rotary rake
Ratelier pour andain gyroscopique

(30) Priorität: 30.12.2009 DE 102009059328
(43) Veröffentlichungstag der Anmeldung: 06.07.2011
(73) Patentinhaber: Daferner, Gerhard, 86554 Pöttmes (DE); Frinzl, Richard, 86529 Schrobenhausen (DE)
(72) Erfinder: Daferner, Gerhard, 86554 Pöttmes (DE); Frinzl, Richard, 86529 Schrobenhausen (DE)
(74) Vertreter: Charrier Rapp & Liebau

(56) Entgegenhaltungen:
- DE-A1- 2 225 846
- DE-U1- 9 002 080
- DE-U1- 29 512 347

## Beschreibung

Die Erfindung betrifft einen Rechen für einen Kreiselschwader nach dem Oberbegriff des Anspruchs 1.

Die EP 1 800 533 A1 zeigt einen Rechen für einen Kreiselschwader, dessen Rechzinken jeweils als Doppelzinken ausgebildet sind. Von einer an einem Zinkenträger befestigten Wicklung ragt an jedem ihrer beiden Enden jeweils ein Schenkel tangential ab, von denen einer insgesamt geradlinig verläuft und der andere so abgewinkelt oder gekrümmt ist, dass sein für die Erfassung von Halmgut wirksamer freier Endabschnitt in einem bestimmten Abstand von dem ersten, geradlinigen Schenkel liegt und zu diesem sowohl in einer der Längsrichtung des Außenabschnitts des Zinkenträgers entsprechenden Ansichtsrichtung, als auch in derjenigen dazu senkrechten Ansichtsrichtung, in welcher der geradlinige Schenkel die maximale Länge hat, schräg steht. Bei der Bewegung des Rechens im Betrieb der Heuwerbungsmaschine eilt der Schenkel mit der Abwinkelung bzw. Krümmung dem zugeordneten geradlinigen Zinken nach, wobei sich beide um die Längsachse des Zinkenträgers, auf dessen Außenabschnitt Wicklung montiert ist, drehen.

Der Zweck dieser Formgebung der Zinkenschenkel besteht darin, dass der nacheilende Schenkel zusätzliches Halmgut erfassen soll, welches von dem anderen, voreilenden Schenkel liegengelassen wurde, wodurch gegenüber einer Lösung mit nur einer einzelnen Schenkelreihe an jedem Rechen eines Arbeitskreisels die Arbeitsqualität der Maschine verbessert wird. Dabei sorgt die zusätzliche Schrägstellung in der zweiten oben genannten Ansichtsrichtung für eine dichtere Anordnung der freien Endabschnitte der Schenkel in Längsrichtung des Rechens, wodurch eine noch vollständigere Erfassung des vorhandenen Halmgutes erreicht werden soll.

Bei einem aus der DE 295 12 347 U1 bekannten, aus Doppelzinken zusammengesetzten Rechen einer Heuwerbungsmaschine haben die für die Erfassung von Halmgut wirksamen freien Endabschnitte der Schenkel jedes Doppelzinkens in einer der Längsrichtung des Außenabschnitts des Zinkenträgers entsprechenden Ansichtsrichtung ebenfalls einen Abstand voneinander, verlaufen jedoch in dieser Ansichtsrichtung ebenso wie in jeder dazu senkrechten Ansichtsrichtung exakt parallel zueinander. Gegenüber der Längsachse des Außenabschnitts des Zinkenträgers sind die freien Endabschnitte der Schenkel genau senkrecht ausgerichtet. Entlang des Zinkenträgers sind abwechselnd zwei unterschiedliche Arten von Doppelzinken mit verschiedenen Abständen der Endabschnitte ihrer beiden Schenkel angeordnet, wodurch sich bezüglich einer der Längsrichtung des Außenabschnitts des Zinkenträgers entsprechenden Ansichtsrichtung insgesamt ein Rechen mit einer dreireihigen Anordnung der freien Endabschnitte der Schenkel im Sinne des Oberbegriff des Anspruchs 1 ergibt.

Die DE 90 02 080 U1 zeigt einen Rechen für eine Heuwerbungsmaschine, der sich aus insgesamt vier Doppelzinken zusammensetzt, von denen drei gleichartig sind und jeweils zwei Schenkel mit zueinander parallelen Endabschnitten aufweisen. Die Endabschnitte der Schenkel dieser drei Doppelzinken bilden in Längsrichtung des Außenabschnitts des Zinkenträgers eine einzige gerade Reihe. Der vierte, am Zinkenträger ganz außen angeordnete Doppelzinken weist zwei verschiedene Schenkel auf, deren Endabschnitte parallel zueinander liegen, jedoch in einer der Längsrichtung des Außenabschnitts des Zinkenträgers entsprechenden Ansichtsrichtung sowohl voneinander, als auch von den in einer Reihe liegenden Endabschnitten der drei anderen Doppelzinken beabstandet sind. Die beiden einzelnen Schenkel des vierten Doppelzinkens bilden jedoch keine Reihen.

Die DE 22 25 846 A1 zeigt einen Kreiselschwadwender mit Zinkenträgern, an denen jeweils nur drei einzelne Zinken angeordnet sind, deren Schenkel sich untereinander in ihrer Länge und Form deutlich unterschieden. Dieser Zinkenanordnung fehlt somit das für die Struktur eines Rechens wesentliche Element der Regelmäßigkeit der Anordnung der an einem gemeinsamen Zinkenträger befestigten Zinken, wie sie jeweils in den zuvor genannten Dokumenten vorgesehen ist. Die Anordnung der Zinken hat hier keine Ähnlichkeit mit einer Reihe.

In Anbetracht des Standes der Technik besteht die Aufgabe der Erfindung darin, einen neuen Rechen für einen Kreiselschwader zu schaffen, mit dem die Arbeitsqualität noch weiter gesteigert werden kann.

Diese Aufgabe wird erfindungsgemäß durch einen Rechen mit den Merkmalen des Anspruchs 1 gelöst. Vorteilhafte Ausgestaltungen sind in den Unteransprüchen angegeben.

An dem erfindungsgemäßen Rechen sind entlang der Längsachse des Außenabschnitts des Zinkenträgers Rechzinken mit mindestens drei unterschiedlichen Gruppen von Schenkeln angeordnet, deren freien Enden in Richtung eines um die Längsachse herum verlaufenden Polarwinkels gegeneinander versetzt sind. Hierdurch ergibt sich eine dreireihige Schenkelformation, d.h. die Schenkel der Zinken bilden drei in der Drehrichtung des Rechens um den Zinkenträger und damit auch in der Bewegungsrichtung des abgesenkten Rechens gegenüber dem Boden aufeinanderfolgende Reihen, die den Futter- und Grünflächenbedingungen optimal angepasst werden können. Im Gegensatz zu Doppelzinken bekannter Art, bei denen alle Zinkenschenkel etwa senkrecht zur Rechfläche gerichtet sind, besitzen die Doppelzinken des erfindungsgemäßen Rechens einen Anfangsabschnitt und einen gegenüber diesem abgewinkelten Endabschnitt. Jeder Zinkenschenkel ist in demjenigen Bereich, in dem die Futteraufnahme und -abgabe erfolgt, zumindest seitlich, d.h. in Richtung der Längsachse des Außenabschnitts des Zinkenträgers abgewinkelt.

Um die drei Schenkelreihen zu ermöglichen, sind zwei verschiedene, jedoch fertigungstechnisch ähnliche Typen von Rechzinken in Form von Doppelzinken erforderlich. Bei Kreiselschwadern, die systembedingt sowohl über rechtsdrehende, als auch über linksdrehende Arbeitskreisel verfügen, wird zu jedem Rechzinkentyp jeweils eine spiegelbildliche Version für die Arbeitskreisel mit der zweiten Drehrichtung benötigt.

Die Zinkenschenkel sind in demjenigen Bereich, in dem die Futteraufnahme und -abgabe erfolgt, nicht nur seitlich, d.h. in Richtung der Längsachse des Außenabschnitts des Zinkenträgers nach außen, sondern auch in Bewegungsrichtung des abgesenkten Rechens gegenüber dem Boden nach vorne deutlich abgewinkelt.

Die Vorteile des erfindungsgemäßen Rechens sind ein besonders sauberes Arbeitsergebnis mit weitestgehender Erfassung des Futters, sowie eine höhere Arbeitsgeschwindigkeit und dadurch bedingt eine größere Flächenleistung. Durch die Abwinkelung der Rechzinkenschenkel nach aussen geben diese das gerechte Futter leichter ab und fördern damit eine präzise Schwadbildung. Die abgewinkelten Rechzinken können während des Schwadvorgangs mehr Futter aufnehmen, da das Futter bei der Aufnahme vom Boden am Schenkel hochgeschoben wird bzw. durch die Schräglage der Schenkelenden mehr Futter auf den Schenkel trifft. Insbesondere in Gebieten, in denen Grünfutter zu Heu getrocknet wird, ist die erfindungsgemäße Anordnung der Zinkenschenkel von Vorteil, da die kleinen trockenen Heuhalme den Zinken eines herkömmlichen Rechens leichter entgehen als feuchtes Grünfutter.

Weitere Vorteile und Merkmale der Erfindung gehen aus der nachfolgenden Beschreibung von Ausführungsbeispielen unter Bezugnahme auf die Zeichnungen hervor. In diesen zeigt
- Fig. 1: eine schematische Seitenansicht eines mit einem erfindungsgemäßen Rechen ausgerüsteten Kreiselschwaders,
- Fig. 2: eine schematische Draufsicht auf einen mit einem erfindungsgemäßen Rechen ausgerüsteten Kreiselschwader,
- Fig. 3: eine erste Ausführungsform einer Zinkenanordnung eines erfindungsgemäßen Rechens in drei Ansichten,
- Fig. 4: einen ersten Typ eines Doppelzinkens eines erfindungsgemäßen Rechens in drei Ansichten,
- Fig. 5: einen zweiten Typ eines Doppelzinkens eines erfindungsgemäßen Rechens in drei Ansichten und
- Fig. 6: eine zweite Ausführungsform einer Zinkenanordnung eines erfindungsgemäßen Rechens in drei Ansichten.

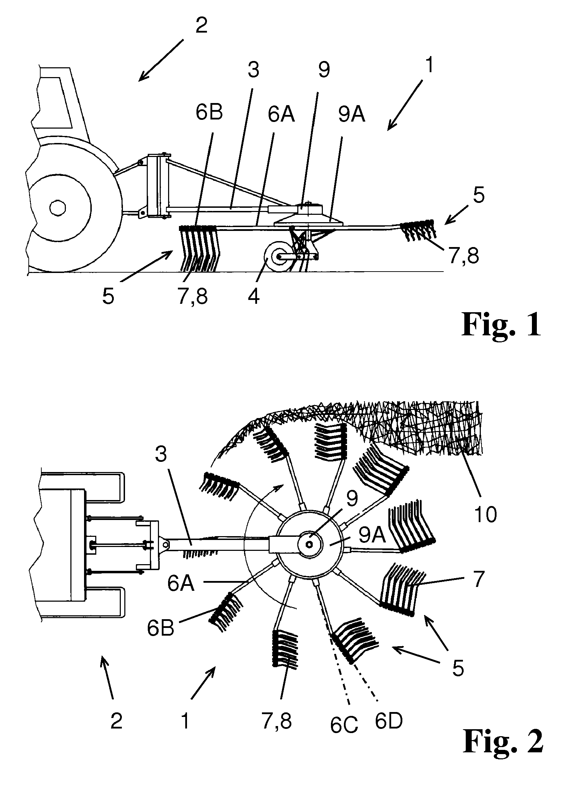

In den Figuren 1 und 2 ist eine Heuwerbungsmaschine in Form eines Kreiselschwaders mit einem Arbeitskreisel 1 in einer Seitenansicht bzw. in der Draufsicht dargestellt. Die Maschine wird von einem Schlepper 2, dessen Fahrtrichtung in den Figuren 1 und 2 nach links verläuft, gezogen und angetrieben. In der gezeigten Arbeitsstellung wird der Arbeitskreisel 1 durch ein Maschinengestell 3, welches auf Rädern 4 läuft, waagrecht in geeignetem Abstand vom Boden geführt. Der Arbeitskreisel 1 dreht sich im Betrieb der Maschine im Uhrzeigersinn, wie es in Fig. 2 durch einen gekrümmten Pfeil angedeutet ist. Er enthält mehrere Rechen 5, die jeweils aus einem Zinkenträger 6A, 6B und einer Vielzahl von Rechzinken 7, 8, nachfolgend kurz als Zinken 7, 8 bezeichnet, bestehen. Die Zinken 7, 8 eines Rechens 5 sind hierbei drehfest an einem Außenabschnitt 6B des Zinkenträgers 6A, 6B angebracht, dessen Innenabschnitt 6A in einer an einem Getriebe 9 gelagerten Glocke 9A drehbar um seine Längsachse 6C drehbar gelagert ist. In Fig. 2 ist an einem der Rechen 5 noch die Längsachse 6D des Außenabschnitts 6B eingezeichnet, die für später folgende Erläuterungen von Bedeutung sind.

Die Zinken 7, 8 jedes Rechens 5 werden im Verlauf einer Umdrehung des Arbeitskreisels 1 durch eine von dem Getriebe 9 bewirkte gleichzeitige Drehbewegung des jeweiligen Zinkenträgers 6A, 6B um die Längsachse 6C seines Innenabschnitts 6A zwischen einer vom Boden abgehobenen, annährend waagrechten Stellung, die in Fig. 1 rechts zu erkennen ist, und einer auf den Boden abgesenkten, annähernd senkrechten Stellung, die in Fig. 1 links zu erkennen ist, hin und her bewegt, so dass sie je nach ihrer momentanen Position am Umfang des Arbeitskreisels 1 abwechselnd außer oder in Eingriff mit dem zu sammelnden Halmgut gelangen. Durch die Bewegungen der Rechen 5 während der Fahrt der Maschine wird ein Schwad 10 von Halmgut gebildet.

Die Zinken 7, 8 eines Rechens 5 bestehen vorzugsweise aus Federstahl. Wie in Fig. 1 am besten links und in Fig. 2 am besten rechts zu erkennen ist, sind die Zinken 7, 8 jeweils entlang des Außenabschnitts 6B des Zinkenträgers 6A, 6B reihenförmig angeordnet. Gegenstand der vorliegenden Erfindung ist die Kombination aus einer speziellen Formgebung der Zinken 7, 8 und einer speziellen Anordnung derselben entlang des Außenabschnitts 6B des Zinkenträgers 6A, 6B, die einen besonders wirksamen Rechen 5 ergibt.

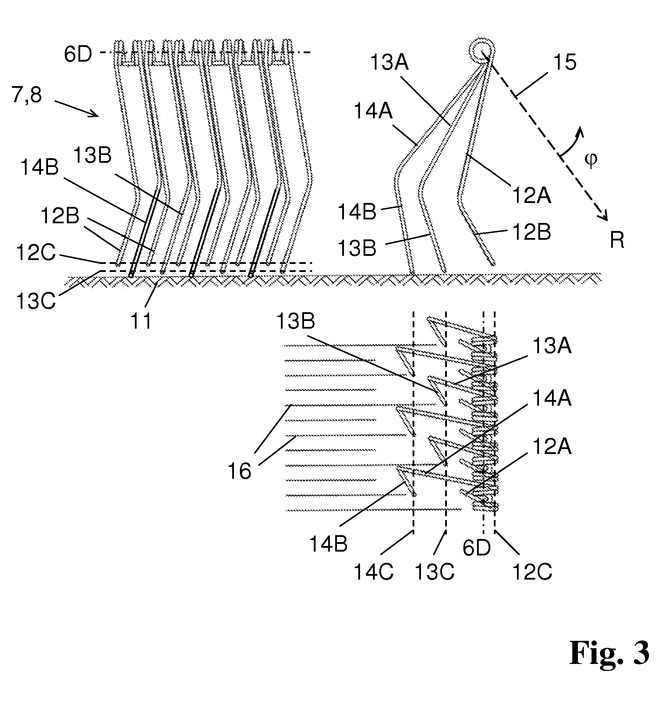

Ein Ausschnitt aus der Zinkenanordnung eines ersten Ausführungsbeispiels eines erfindungsgemäßen Rechens 5 ist in Fig. 3 in drei Ansichten dargestellt, wobei die Richtung der Seitenansicht rechts oben der Richtung der Längsachse 6D des Außenabschnitts 6B des Zinkenträgers 6A, 6B entspricht. In der Vorderansicht links oben ist der Rechen 5 gegenüber der Seitenansicht um 90° nach links und in der Draufsicht rechts unten gegenüber der Seitenansicht um 90° nach unten geklappt. Der Zinkenträger 6A, 6B ist in Fig. 3 der Übersichtlichkeit halber nicht dargestellt, sondern es ist darin nur die Längsachse 6D seines Außenabschnitts 6B eingezeichnet. In der Seitenansicht verläuft diese senkrecht zur Zeichenebene und ist daher nicht zu sehen. In den Ansichten von Fig. 3 ist der Rechen 5 in Richtung des Bodens 11 abgesenkt.

Wie aus Fig. 3 zu ersehen ist, weisen die Zinken 7, 8 eines erfindungsgemäßen Rechens 5 in dieser Ausführungsform drei verschiedene Gruppen von Schenkeln, nämlich erste Schenkel 12A, 12B, zweite Schenkel 13A, 13B und dritte Schenkel 14A, 14B von untereinander verschiedenen Formen auf, wobei jeder Schenkel aus einem tangential von dem Endabschnitt 6B des Zinkenträgers 6A, 6B abragenden Anfangsabschnitt 12A bzw. 13A bzw. 14A sowie einem demgegenüber abgewinkelten Endabschnitt 12B bzw. 13B bzw. 14B besteht.

Die Zinken 7, 8 sind an dem Außenabschnitt 6B des Zinkenträgers 6A, 6B so angeordnet, dass jeweils alle Schenkel derselben Gruppe eine zumindest annähernd geradlinige Reihe bilden und die freien Enden ihrer jeweiligen Endabschnitte 12B, 13B und 14B zugeordnete Schenkelendlinien 12C, 13C und 14C definieren. Letztere sind in Fig. 3 in der Draufsicht rechts unten und teilweise auch in der Vorderansicht links oben eingezeichnet, wobei die Schenkelendlinie 14C in der Vorderansicht fehlt, weil sie mit der Oberfläche des Bodens 11 zusammenfällt. In der Seitenansicht sind die Schenkelendlinien 12C, 13C und 14C nicht zu sehen, da sie senkrecht zur Ansichtsebene verlaufen. Ihre Positionen sind dort durch die Enden der Endabschnitte 12B, 13B und 14B gegeben.

In der Seitenansicht rechts oben ist eine Polarachse 15 eingezeichnet, die durch die Längsachse 6D des Außenabschnitt 6B des Zinkenträgers 6A, 6B verläuft. Anhand dieser Polarachse 15 sind in der Seitenansicht Positionen von Objekten durch den auf diese Achse bezogenen Polarwinkel ϕ und durch den radialen Abstand R von der Längsachse 6D definiert, d.h. der Polarwinkel ϕ und der radiale Abstand R bilden in besagter Seitenansicht ein Polarkoordinatensystem.

Wie aus Fig. 3 zu ersehen ist, liegen die verschiedenen Schenkelendlinien 12C, 13C und 14C bei verschiedenen Werten des Polarwinkels ϕ. Da sich der gesamte Rechen 5 im Betrieb um die Längsachse 6C (siehe Fig. 2) des Innenabschnitts 6A des Zinkenträgers 6A, 6B dreht, vollführen die Schenkel 12A, 12B, 13A, 13B und 14A, 14B der Zinken 7, 8 auch eine Drehbewegung um die Längsachse 6D des Außenabschnitts 6B des Zinkenträgers 6A, 6B. Diese Drehbewegung hat während des Absenkens des Rechens 5 zum Boden 11 die in Fig. 3 eingetragene Richtung des Polarwinkels ϕ, so dass die Gruppe der ersten Schenkel 12A, 12B der Gruppe der zweiten Schenkel 13A, 13B und diese wiederum der Gruppe der dritten Schenkel 14A, 14B vorauseilt, bis der Rechen 5 die in Fig. 3 gezeigte Stellung maximaler Absenkung zum Boden 11 erreicht hat. Auch in Bezug auf das Überstreichen des Bodens 11 durch die Schenkel 12A, 12B, 13A, 13B und 14A, 14B in der abgesenkten Stellung des Rechens 5 gibt es somit eine Gruppe von vorauseilenden Schenkeln 12A, 12B, eine Gruppe von mittleren Schenkeln 13A, 13B und eine Gruppe von nacheilenden Schenkeln 14A, 14B. Das Abheben des Rechens 5 vom Boden 11 erfolgt durch eine Drehung entgegengesetzt zu der in Fig. 3 eingetragenen Richtung des Polarwinkels ϕ.

Wie aus der Vorderansicht und der Draufsicht von Fig. 3 zu erkennen ist, sind die Zinken 7, 8 entlang der Längsachse 6D des Außenabschnitts 6B des Zinkenträgers 6A, 6B so aneinandergereiht, dass bei der Bewegung des Rechens 5 über den Boden 11 eng benachbarte Stellen des Bodens 11 zeitlich nacheinander von Schenkeln verschiedener Gruppen überstrichen werden. Dies hat zur Folge, dass von den Schenkeln 12A, 12B der voreilenden Gruppe liegengelassenes Halmgut von den Schenkeln 13A, 13B der mittleren Gruppe erfasst werden kann und abermals liegengelassenes Halmgut schließlich noch von den Schenkeln 14A, 14B der nacheilenden Gruppe erfasst werden kann, wodurch die Menge an insgesamt erfasstem Halmgut gegenüber Rechen mit nur zwei Gruppen von Zinkensschenkeln weiter gesteigert wird.

Dabei ist der radiale Abstand der Schenkelendlinie 12C von der Längsachse 6D des Außenabschnitts 6B des Zinkenträgers 6A, 6B, also die effektive Gesamtlänge der vorauseilenden Schenkel 12A, 12B am geringsten und der radiale Abstand der Schenkelendlinie 12C von der Längsachse 6D, also die effektive Gesamtlänge der nacheilenden Schenkel 14A, 14B am größten. In jedem Fall nimmt die effektive Länge der Schenkel 12A, 12B, 13A, 13B und 14A, 14B ausgehend vom kürzesten Schenkel 12A, 12B mit zunehmendem Betrag des Polarwinkels ϕ monoton zu. Hierbei ist der kürzeste Schenkel 12A, 12B signifikant kürzer als die beiden anderen, die sich untereinander wesentlich weniger in der Länge unterscheiden. Die effektive Länge braucht im mathematischen Sinne nur einfach und nicht streng monoton zuzunehmen, d.h. die anderen Schenkel 13A, 13B und 14A, 14B könnten auch untereinander nahezu gleich lang sein.

Durch die monotone Zunahme der effektiven Schenkellänge wird erreicht, dass im Betrieb zuerst von der Gruppe voreilender kürzerer Schenkel 12A, 12B oben liegende Halme aufgenommen werden, anschließend von der Gruppe mittlerer längerer Schenkel 13A, 13B niedriger liegende Halme aufgenommen werden und schließlich von der Gruppe nacheilender längster Schenkel 14A, 14B die am niedrigsten liegenden Halme aufgenommen werden.

Um die Greifwirkung der Zinken 7, 8 gegenüber dem Halmgut in ihrer Bewegungsrichtung über dem Boden 11 zu erhöhen, verlaufen in der Seitenansicht zunächst die jeweiligen Anfangsabschnitte 12A, 13A und 14A der Schenkel 12A, 12B, 13A, 13B und 14A, 14B ausgehend von dem Außenabschnitt 6B des Zinkenträgers 6A, 6B unter voneinander verschiedenen Polarwinkeln ϕ geradlinig tangential und die Endabschnitte 12B, 13B und 14B sind gegenüber den Anfangsabschnitten 12A, 13A und 14A abgewinkelt, und zwar bei allen verschiedenen Gruppen von Schenkeln 12A, 12B, 13A, 13B und 14A, 14B in der gleichen Winkelrichtung. Hierdurch wird eine vorgesehene Drehrichtung des Rechens 5 beim Absenken zum Boden 11 während des Betriebes an einem Arbeitskreisel 1 eines Kreiselschwaders definiert, indem die freien Enden der Endabschnitte 12A, 13A und 14A in Richtung besagter Drehung schräg nach vorne zeigen. Diese Drehrichtung entspricht also der positiven Richtung des in Fig. 3 eingetragenen Polarwinkels ϕ.

Wie die Seitenansicht von Fig. 3 weiter zeigt, sind die Längenverhältnisse zwischen den Anfangsabschnitten 12A, 13A und 14A und den Endabschnitten 12B, 13B und 14B nur innerhalb jeder der drei verschiedenen Gruppen von Schenkeln 12A, 12B, 13A, 13B und 14A, 14B gleich, zwischen den Gruppen jedoch verschieden. So ist bei dem voreilenden Schenkel 12A, 12B das Längenverhältnis am größten, bei dem mittleren Schenkel 13A, 13B kleiner und bei dem nacheilenden Schenkel 14A, 14B am kleinsten. Dies ergibt sich aus der monotonen Zunahme der effektiven Gesamtlänge, d.h. der Distanz der jeweiligen Schenkelendlinie 12C bzw. 13C bzw. 14C von der Längeachse 6D des Außenabschnitts 6B des Zinkenträgers 6A, 6B von dem voreilenden Schenkel 12A, 12B über den mittleren Schenkel 13A, 13B bis zum nacheilenden Schenkel 14A, 14B bei annähernd gleichbleibendem Winkel zwischen dem jeweiligen Anfangsabschnitt 12A, 13A und 14A und dem zugehörigen Endabschnitt 12B bzw. 13B bzw. 14B.

Zusätzlich zu der in der Seitenansicht sichtbaren Abwinkelung in Absenkungsdrehrichtung sind die Schenkel 12A, 12B, 13A, 13B und 14A, 14B der Zinken 7, 8 auch in Bezug auf die Richtung der Längsachse 6D des Außenabschnitts 6B des Zinkenträgers 6A, 6B abgewinkelt, wie insbesondere die Vorderansicht von Fig. 3, aber auch die Draufsicht zeigt. Die Anfangsabschnitte 12A, 13A und 14A verlaufen in der Vorderansicht nicht senkrecht in Richtung des Bodens 11, sondern etwas schräg. Die Endabschnitte 12B, 13B und 14B verlaufen ebenfalls nicht senkrecht zum Boden 11, sondern etwas schräg, wobei die Neigung der Endabschnitte 12B, 13B und 14B gegenüber der Vertikalrichtung entgegengesetzt zur Neigung der Anfangsabschnitte 12A, 13A und 14A ist. Dies bezieht sich jedoch nur auf das Vorzeichen und nicht auf den Betrag des Neigungswinkels. Letzterer kann auch unterschiedlich sein. Sowohl die Anfangsabschnitte 12A, 13A und 14A, als auch Endabschnitte 12B, 13B und 14B verlaufen in der Vorderansicht jeweils alle parallel zueinander.

Durch diese Schrägstellung der Endabschnitte 12B, 13B und 14B werden durchgängige vertikale Lücken zwischen benachbarten Endabschnitten 12B, 13B und 14B vermieden, durch welche unter einem steilen Winkel zum Boden, d.h. näherungsweise vertikal liegendes Halmgut der Erfassung entgehen könnte. Ferner erleichtert die Schrägstellung der Endabschnitte 12B, 13B und 14B nach außen, also zum freien Ende des Außenabschnitts 6B des Zinkenträgers 6A,6B hin, die Abgabe des aufgenommenen Futters beim Anheben des Rechens 5, d.h. beim Zurückdrehen in der negativen Richtung des Polarwinkels ϕ.

Wie aus der Draufsicht von Fig. 3 hervorgeht, ist die reihenförmige Anordnung der Zinken 7, 8 in Richtung der Längsachse 6D des Außenabschnitts 6B des Zinkenträgers 6A, 6B so ausgelegt, dass auf einen voreilenden Schenkel 12A, 12B zuerst ein mittlerer Schenkel 13A, 13B, dann wieder ein voreilender Schenkel 12A, 12B und schließlich ein nacheilender Schenkel 14A, 14B folgt. Diese Anordnung wiederholt sich dann periodisch entlang der Längsachse 6D. Insgesamt enthält ein Rechen 5 somit genauso viele mittlere Schenkel 13A, 13B wie nacheilende Schenkel 14A, 14B und doppelt so viele voreilende Schenkel 12A, 12B.

Die waagrechten Linien 16 in der Draufsicht von Fig. 3 kennzeichnen die Abstände zwischen den freien Enden der Schenkel-Endabschnitte 12B, 13B und 14B quer zur Richtung der Bewegung über den Boden 11. Diese freien Enden liegen also in Bezug auf die Längsachse 6D sowohl innerhalb jeder einzelnen Gruppe von Schenkeln 12A, 12B, 13A, 13B und 14A, 14B, als auch gruppenübergreifend äquidistant zueinander, wobei der Abstand zwischen den Enden zweier mittlerer Schenkel 13A, 13B und zwischen den Enden zweier nacheilender Schenkel 14A, 14B jeweils der gleiche ist und der Abstand zwischen den Enden zweier voreilender Schenkel 12A, 12B nur halb so groß ist. Dies liegt daran, dass es sich bei den Zinken 7, 8 um zwei verschiedene Typen von Doppelzinken 7 und 8 mit jeweils zwei verschiedenen Schenkeln handelt, die entlang der Längsachse 6D einander abwechselnd angeordnet sind, und dass die Abwinkelung der Schenkel 12A, 12B, 13A, 13B und 14A, 14B so gestaltet ist, dass die Endabschnitte 12B, 13B und 14B in der Vorderansicht annähernd parallel und äquidistant zueinander liegen.

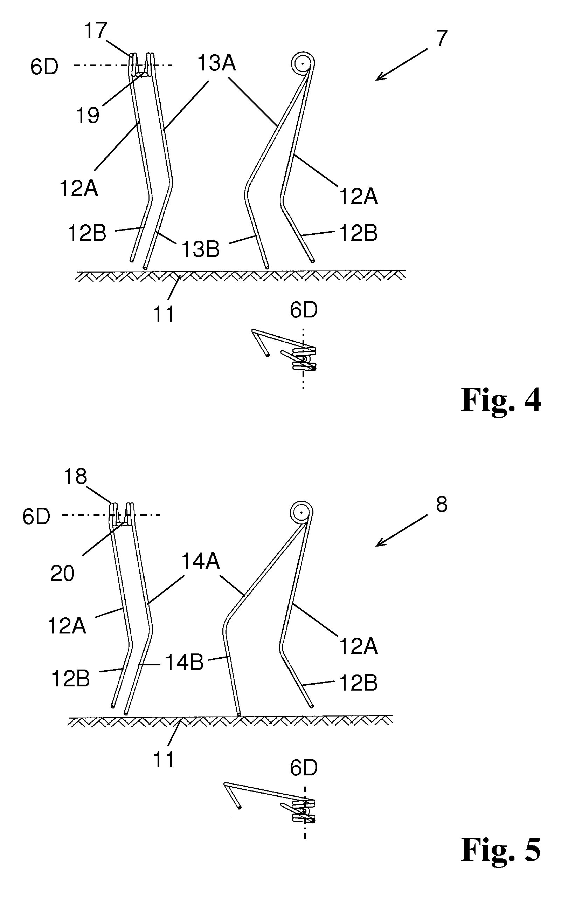

In den Figuren 4 und 5 sind diese zwei Doppelzinken 7 und 8 jeweils einzeln gezeigt. Dabei entsprechen die drei in jeder dieser Figuren gezeigten Ansichten genau denjenigen von Fig. 3, nur ist anstelle eines Ausschnitts eines Rechens 5 jeweils nur ein einzelner Zinken 7 bzw. 8 dargestellt. Wie aus Fig. 4 zu ersehen ist, besteht der Doppelzinken 7 aus einem ersten Schenkel 12A, 12B, und einem zweiten Schenkel 13A, 13B, also denjenigen Arten von Schenkeln, die an einem Rechen 5 der zuvor beschriebenen Art die voreilende und die mittlere Stellung einnehmen. Demgegenüber besteht der Doppelzinken 8, wie die aus Fig. 5 zu ersehen ist, aus einem ersten Schenkel 12A, 12B, und einem zweiten Schenkel 14A, 14B, also denjenigen Arten von Schenkeln, die an einem Rechen 5 der zuvor beschriebenen Art die voreilende und die nacheilende Stellung einnehmen.

Bei beiden Typen von Doppelzinken 7 und 8 sind die beiden Schenkel 12A, 12B und 13A, 13B bzw. 12A, 12B und 14A, 14B durch eine Wicklung 17 bzw. 18 miteinander verbunden. Diese Wicklung 17 bzw. 18 ist durch die Formgebung eines jeweiligen Mittelabschnitts 19 bzw. 20 dazu vorgerichtet, an dem Außenabschnitt 6B des Zinkenträgers 6A, 6B drehfest befestigt zu werden, und zwar so, dass die Längsachse der Wicklung 17 bzw. 18 mit der Längsachse 6D des Außenabschnitts 6B des Zinkenträgers 6A, 6B zusammenfällt. Die Längsachse der Wicklung 17 bzw. 18 ist daher in den Figuren 4 und 5 ebenfalls mit 6D gekennzeichnet. Die Schenkel 12A, 12B und 13A, 13B und die Wicklung 17 des Zinkens 7 sowie die Schenkel 12A, 12B und 14A, 14B und die Wicklung 18 des Zinkens 8 sind jeweils aus einem einzigen Stück Federstahl von vorzugsweise kreisförmigem Querschnitt hergestellt. Die Formgebung der drei verschiedenen Schenkel 12A, 12B und 13A, 13B sowie 14A, 14B wurde bereits vorausgehend anhand Fig. 3 beschrieben und bedarf daher an dieser Stelle keiner weiteren Erläuterung.

Die unterschiedliche Anzahl der verschiedenen Arten von Schenkeln an einem Rechen 5 bei der Ausführungsform nach Fig. 3 ergibt sich somit zwangsläufig daraus, dass gleich viele Zinken beider Typen 7 und 8 abwechselnd in einer Reihe angeordnet sind, und dass der kürzeste, voreilende Schenkel 12A, 12B bei beiden Zinken 7 und 8 gleichermaßen vorhanden ist, während der mittlere Schenkel 13A, 13B nur bei dem Zinken 7 und der längste, nacheilende Schenkel 14A, 14B nur bei dem Zinken 8 vorhanden ist. Durch diese Auslegung können einerseits beide Zinken 7 und 8 in der bewährten und kostengünstigen Bauform von Doppelzinken realisiert werden, andererseits ist die Gruppe der voreilenden Schenkel 12A, 12B, welche bereits den überwiegenden Teil des Halmgutes aufnehmen soll, in der durch die Achse 6D definierten Längsrichtung des Rechens 5 doppelt so dicht besetzt wie jeweils die Gruppe der mittleren Schenkel 13A, 13B und die Gruppe der nacheilenden Schenkel 14A, 14B, die nur geringere Mengen des Halmgutes aufzunehmen brauchen.

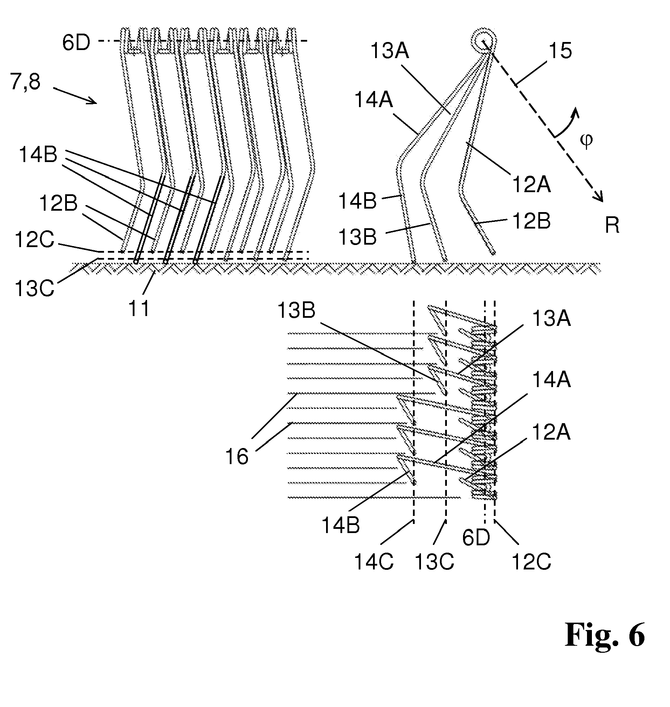

In Fig. 6 ist ein Ausschnitt aus der Zinkenanordnung eines zweiten Ausführungsbeispiels eines erfindungsgemäßen Rechens 5 in drei Ansichten dargestellt, welche exakt den Ansichten der Fig. 3 entsprechen. Mit der ersten Ausführungsform übereinstimmende Teile sind in Fig. 6 mit den gleichen Bezugszahlen gekennzeichnet. Der Unterschied zur ersten Ausführungsform von Fig. 3 ist insbesondere in der Draufsicht rechts unten und bei genauer Betrachtung auch in der Vorderansicht links oben erkennbar. Er besteht darin, dass entlang eines ersten zusammenhängenden Bereiches des Außenabschnitts 6B des Zinkenträgers 6A, 6B zunächst ausschließlich Doppelzinken 7 mit voreilenden, kürzesten Schenkeln 12A, 12B und mit mittleren Schenkeln 13A, 13B montiert sind und entlang eines zweiten, an den ersten axial anschließenden und weiter außen, d.h. näher bei dem freien Ende des Außenabschnitts 6B liegenden Bereiches ausschließlich Doppelzinken 8 mit voreilenden, kürzesten Schenkeln 12A, 12B und mit nacheilenden, längsten Schenkeln 14A, 14B montiert sind. Die Doppelzinken 7 und 8 sind dieselben wie bei der ersten Ausführungsform von Fig. 3.

Die zweite Ausführungsform ist insbesondere bei starken Futtererträgen vorteilhaft, da die nacheilenden, längsten Schenkel 14A, 14B in diesem Fall aufgrund ihres größeren Abstandes zu den voreilenden, kürzesten Schenkeln 13A, 13B mehr Raum für die Schwadbildung schaffen. Demgegenüber ist die erste Ausführungsform mit den durchweg geringeren Abständen zwischen den voreilenden, kürzesten Schenkeln 13A, 13B und den mittleren Schenkeln 13A, 13B einerseits und zwischen den mittleren Schenkeln 13A, 13B und den nacheilenden, längsten Schenkeln 14A, 14B andererseits eher bei kleineren Futtererträgen von Vorteil.

Es versteht sich, dass für einen Fachmann in Anbetracht der vorgestellten Ausführungsbeispiele einige Variationsmöglichkeiten gegeben sind. So eignet sich die Erfindung, wie eingangs bereits erwähnt, ebenso gut zur Anwendung bei Schwadern mit mehr als einem Arbeitskreisel, wozu ggf. zusätzliche, spiegelbildlich geformte Doppelzinken benötigt werden. Ferner könnten die beiden verschiedenen Typen von Doppelzinken 7 und 8 auch in anderen Gruppierungen entlang der Längsachse 6D angeordnet werden, beispielsweise jeweils zwei Doppelzinken 7 abwechselnd mit zwei Doppelzinken 8. Auch könnten mehr als zwei verschiedene Typen von Doppelzinken vorgesehen sein, z.B. zusätzlich ein dritter mit einem noch größeren Winkelabstand zwischen den beiden Schenkeln, als ihn die beiden ersten Doppelzinken aufweisen. Mit Hilfe eines solchen dritten Doppelzinkens könnte dann ein Rechen mit vier bezüglich der Polarwinkelrichtung ϕ gegeneinander versetzten Gruppen von Schenkeln realisiert werden. Solche und vergleichbare Variationen liegen im fachmännischen Ermessen und sollen vom Schutz der Patentansprüche umfasst sein.

## Patentansprüche

1. Rechen (5) für einen Kreiselschwader, mit einem Zinkenträger (6A, 6B), der einen sich längs einer Achse (6D) erstreckenden Außenabschnitt (6B) aufweist, an welchem eine Vielzahl von Rechzinken (7; 8) mit jeweils von dem Außenabschnitt (6B) des Zinkenträgers (6A, 6B) abragenden Schenkeln (12A, 12B; 13A, 13B; 14A, 14B) nebeneinander in einer reihenförmigen Anordnung befestigt sind, wobei die Rechzinken (7; 8) mindestens drei unterschiedliche Gruppen von Schenkeln (12A, 12B; 13A, 13B; 14A, 14B) aufweisen, deren freie Enden innerhalb jeder einzelnen Gruppe zumindest annähernd auf einer parallel zur Längsachse (6D) des Außenabschnitts (6B) des Zinkenträgers (6A, 6B) verlaufenden geraden Line liegen und so eine der jeweiligen Schenkelgruppe zugeordnete Schenkelendlinie (12C; 13C; 14C) definieren, und wobei in einer der Längsrichtung des Außenabschnitts (6B) des Zinkenträgers entsprechenden Ansichtsrichtung die Schenkelendlinien (12C; 13C; 14C) der unterschiedlichen Gruppen von Schenkeln (12A, 12B; 13A, 13B; 14A, 14B) zumindest alle voneinander verschiedene Polarwinkel ϕ bezüglich einer durch die Längsachse (6D) des Außenabschnitts (6B) des Zinkenträgers (6A, 6B) verlaufenden Polarachse (15) aufweisen, wobei in einer der Längsrichtung des Außenabschnitts (6B) des Zinkenträgers (6A, 6B) entsprechenden Ansichtsrichtung die Schenkel (12A, 12B; 13A, 13B; 14A, 14B) der Rechzinken (7; 8) jeweils einen von dem Außenabschnitt (6B) des Zinkenträgers (6A, 6B) zumindest annähernd radial oder tangential abragenden Anfangsabschnitt (12A; 13A; 14A) und einen gegenüber dem Anfangsabschnitt abgewinkelten Endabschnitt (12B; 13B; 14B) aufweisen, wobei die Richtung der Abwinkelung bei allen Gruppen von Schenkeln (12A, 12B; 13A, 13B; 14A, 14B) die gleiche ist, wobei der Winkel der Abwinkelung innerhalb jeder Gruppe gleich ist, **dadurch gekennzeichnet, dass** in derjenigen senkrecht zur Längsachse (6D) des Außenabschnitts (6B) des Zinkenträgers (6A, 6B) verlaufenden Ansichtsrichtung, in welcher die Länge eines Schenkels (12A, 12B; 13A, 13B; 14A, 14B) maximal ist, der Endabschnitt (12B; 13B; 14B) des Schenkels (12A, 12B; 13A, 13B; 14A, 14B) gegenüber dem Anfangsabschnitt (12A; 13A; 14A) abgewinkelt ist.

2. Rechen nach Anspruch 1, **dadurch gekennzeichnet, dass** in einer der Längsrichtung des Außenabschnitts (6B) des Zinkenträgers (6A, 6B) entsprechenden Ansichtsrichtung die Schenkelendlinien (12C; 13C; 14C) der unterschiedlichen Gruppen von Schenkeln (12A, 12B; 13A, 13B; 14A, 14B) zumindest teilweise voneinander verschiedene radiale Abstände von der Längsachse (6D) des Außenabschnitts (6B) des Zinkenträgers (6A, 6B) aufweisen.

3. Rechen nach Anspruch 1 oder 2, **dadurch gekennzeichnet, dass** in einer der Längsrichtung des Außenabschnitts (6B) des Zinkenträgers (6A, 6B) entsprechenden Ansichtsrichtung der radiale Abstand einer ersten Schenkelendlinie (12C), die einer ersten Gruppe von Schenkeln (12A, 12B) zugeordnet ist, von der Längsachse (6D) des Außenabschnitts (6B) des Zinkenträgers (6A, 6B) signifikant geringer ist als diejenigen der übrigen Schenkelendlinien (13C; 14C), und dass die radialen Abstände der übrigen Schenkelendlinien (13C; 14C) von der Längsachse (6D) des Außenabschnitts (6B) des Zinkenträgers (6A, 6B) in derjenigen Reihenfolge der Gruppen von Schenkeln (12A, 12B; 13A, 13B; 14A, 14B) monoton zunehmen, in welcher sowohl der Betrag des Polarwinkels ϕ gegenüber einer durch die Längsachse (6D) des Außenabschnitts (6B) des Zinkenträgers (6A, 6B) und die erste Schenkelendlinie (12C) verlaufenden Polarachse, als auch der Abstand von der ersten Schenkelendlinie (12C) zunehmen.

4. Rechen nach einem der Ansprüche 1 bis 3, **dadurch gekennzeichnet, dass** in einer der Längsrichtung des Außenabschnitts (6B) des Zinkenträgers (6A, 6B) entsprechenden Ansichtsrichtung der radiale Abstand einer ersten Schenkelendlinie (12C), die einer ersten Gruppe von Schenkeln (12A, 12B) zugeordnet ist, von der Längsachse (6D) des Außenabschnitts des Zinkenträgers (6A, 6B) signifikant geringer ist als diejenigen der übrigen Schenkelendlinien (13C; 14C), und dass bei allen Gruppen von Schenkeln (13A, 13B; 14A, 14B) mit Ausnahme der ersten (12A, 12B) die Abstände der Schenkelendlinien (13C; 14C) von der ersten Schenkelendlinie (12C) infolge der jeweiligen Abwinkelungen der Schenkel (13A, 13B; 14A, 14B) geringer sind als sie es ohne diese Abwinkelungen wären.

5. Rechen nach einem der Ansprüche 1 bis 4, **dadurch gekennzeichnet, dass** in einer der Längsrichtung des Außenabschnitts (6B) des Zinkenträgers (6B, 6D) entsprechenden Ansichtsrichtung die Richtung der Abwinkelungen eine vorgesehene Drehrichtung des Rechens (5) beim Absenken zum Boden (11) während des Betriebes in einem Arbeitskreisel (1) definiert, indem der Endabschnitt (12B; 13B; 14B) jeweils bezüglich dieser Drehrichtung schräg nach vorne zeigt.

6. Rechen nach einem der Ansprüche 1 bis 5, **dadurch gekennzeichnet, dass** in einer der Längsrichtung des Außenabschnitts (6B) des Zinkenträgers (6B, 6D) entsprechenden Ansichtsrichtung der radiale Abstand einer ersten Schenkelendlinie (12C), die einer ersten Gruppe von Schenkeln (12A, 12B) zugeordnet ist, von der Längsachse (6D) des Außenabschnitts (6B) des Zinkenträgers (6A, 6B) signifikant geringer ist als diejenigen der übrigen Schenkelendlinien (13C; 14C), und dass das Längenverhältnis zwischen den jeweiligen Anfangsabschnitten (12A; 13A; 14A) und Endabschnitten (12B; 13B; 14B) der Schenkel (12A, 12B; 13A, 13B; 14A, 14B) in derjenigen Reihenfolge der Gruppen von Schenkeln (12A, 12B; 13A, 13B; 14A, 14B) monoton abnimmt, in welcher sowohl der Betrag des Polarwinkels ϕ gegenüber einer durch die Längsachse (6D) des Außenabschnitts (6B) des Zinkenträgers (6A, 6B) und die erste Schenkelendlinie (12C) verlaufenden Polarachse, als auch der Abstand von der ersten Schenkelendlinie (12C) zunehmen.

7. Rechen nach einem der Ansprüche 1 bis 6, **dadurch gekennzeichnet, dass** in derjenigen senkrecht zur Längsachse (6D) des Außenabschnitts (6B) des Zinkenträgers (6A, 6B) verlaufenden Ansichtsrichtung, in welcher die Länge eines Schenkels (12A, 12B; 13A, 13B; 14A, 14B) maximal ist, sowohl der Anfangsabschnitt (12A; 13A; 14A), als auch der Endabschnitt (12B; 13B; 14B) des Schenkels (12A, 12B; 13A, 13B; 14A, 14B) schräg zur Längsachse (6D) des Außenabschnitts (6B) des Zinkenträgers (6A, 6B) steht, und dass der jeweilige Winkel zu dieser Längsachse (6D) im einen Fall weniger und im anderen Fall mehr als 90° beträgt.

8. Rechen nach einem der Ansprüche 1 bis 7, **dadurch gekennzeichnet, dass** in derjenigen senkrecht zur Längsachse (6D) des Außenabschnitts (6B) des Zinkenträgers (6A, 6B) verlaufenden Ansichtsrichtung, in welcher die Länge der kürzesten Schenkel (12A, 12B) maximal ist, die Endabschnitte (12B; 13B; 14B) aller Schenkel (12A, 12B; 13A, 13B; 14A, 14B) der Rechzinken (7, 8) zumindest annähernd parallel zueinander verlaufen und in Richtung der Längsachse (6D) des Außenabschnitts (6B) des Zinkenträgers (6A, 6B) zumindest annähernd äquidistant zueinander liegen.

9. Rechen nach einem der Ansprüche 1 bis 7, **dadurch gekennzeichnet, dass** die Zinken (7; 8) jeweils als Doppelzinken mit einer an einem Zinkenträger (6A, 6B) befestigbaren, längs einer Achse (6D) verlaufenden Wicklung (17; 18) und zwei von den beiden axialen Enden der Wicklung (17; 18) abragenden Schenkeln (12A, 12B; 13A, 13B; 14A, 14B) ausgebildet sind, und dass der Rechen (5) mindestens zwei verschiedene Typen von Doppelzinken enthält, die sich voneinander in mindestens einem (13A, 13B; 14A, 14B) der zwei Schenkel unterscheiden.

10. Rechen nach Anspruch 9, **dadurch gekennzeichnet, dass** er zwei verschiedene Typen von Doppelzinken (7; 8) enthält, die sich voneinander in genau einem (13A, 13B; 14A, 14B) der zwei Schenkel (12A, 12B; 13A, 13B; 14A, 14B) unterscheiden.

11. Rechen nach Anspruch 10, **dadurch gekennzeichnet, dass** der bei beiden Typen von Doppelzinken (7; 8) gleiche Schenkel derjenige Schenkel (12A, 12B) ist, dessen Ende jeweils den geringeren radialen Abstand von der Achse (6D) der Wicklung (17; 18) hat.

12. Rechen nach einem der Ansprüche 9 bis 11, **dadurch gekennzeichnet, dass** die verschiedenen Typen von Doppelzinken (7; 8) in einer periodisch abwechselnden Reihenfolge entlang des Außenabschnitts (6B) des Zinkenträgers (6A, 6B) angeordnet sind.

13. Rechen nach einem der Ansprüche 9 bis 11, **dadurch gekennzeichnet, dass** die verschiedenen Typen von Doppelzinken (7; 8) auf verschiedene in Längsrichtung aufeinanderfolgende Bereiche des Außenabschnitts (6B) des Zinkenträgers (6A, 6B) verteilt sind, wobei in jedem einzelnen dieser Bereiche ausschließlich Doppelzinken (7 oder 8) eines einzigen Typs angeordnet sind.

## Claims

1. Rake (5) for a rotary windrower, having a tine carrier (6A, 6B) which has an outer section (6B) which extends along an axis (6D) and to which a plurality of rake tines (7; 8) having arms (12A, 12B; 13A, 13B; 14A, 14B) projecting in each case from the outer section (6B) of the tine carrier (6A, 6B) are attached adjacent to each other in a row, wherein the rake tines (7; 8) have at least three different groups of arms (12A, 12B; 13A, 13B; 14A, 14B) of which the free ends within each individual group lie at least approximately in a straight line running parallel to the longitudinal axis (6D) of theouter section (6B) of the tine carrier (6A, 6B) and so define an arm-end line (12C; 13C; 14C) associated with the respective group of arms, and wherein, in a viewing direction corresponding to the longitudinal direction of the outer section (6B) of the tine carrier, the arm-end lines (12C; 13C; 14C) of the different groups of arms (12A, 12B; 13A, 13B; 14A, 14B) at least all have polar angles φ different to each other with respect to a polar axis (15) running through the longitudinal axis (6D) of the outer section (6B) of the tine carrier (6A, 6B), wherein, in a viewing direction corresponding to the longitudinal direction of the outer section (6B) of the tine carrier (6A, 6B), the arms (12A, 12B; 13A, 13B; 14A, 14B) of the rake tines (7; 8) each have an initial section (12A; 13A; 14A) projecting at least approximately radially or tangentially from the outer section (6B) of the tine carrier (6A, 6B) and an end section (12B; 13B; 14B) bent at an angle to the initial section, wherein the direction of bending is the same for all groups of arms (12A, 12B; 13A, 13B; 14A, 14B), wherein the angle of bending is the same within each group, **characterised in that**, in the viewing direction which runs perpendicularly to the longitudinal axis (6D) of the outer section (6B) of the tine carrier (6A, 6B) and in which the length of an arm (12A, 12B; 13A, 13B; 14A, 14B) is maximal, the end section (12B; 13B; 14B) of the arm (12A, 12B; 13A, 13B; 14A, 14B) is bent at an angle to the initial section (12A; 13A; 14A).

2. Rake according to claim 1, **characterised in that**, in a viewing direction corresponding to the longitudinal direction of the outer section (6B) of the tine carrier (6A, 6B), the arm-end lines (12C; 13C; 14C) of the different groups of arms (12A, 12B; 13A, 13B; 14A, 14B) at least partially have radial distances from the longitudinal axis (6D) of the outer section (6B) of the tine carrier (6A, 6B) different to each other.

3. Rake according to claim 1 or 2, **characterised in that**, in a viewing direction corresponding to the longitudinal direction of the outer section (6B) of the tine carrier (6A, 6B), the radial distance of a first arm-end line (12C), which is associated with a first group of arms (12A, 12B), from the longitudinal axis (6D) of the outer section (6B) of the tine carrier (6A, 6B) is significantly less than those of the other arm-end lines (13C; 14C), and **in that** the radial distances of the other arm-end lines (13C; 14C) from the longitudinal axis (6D) of the outer section (6B) of the tine carrier (6A, 6B) increase monotonically in the same order of the groups of arms (12A, 12B; 13A, 13B; 14A, 14B) in which both the amount of the polar angle φ relative to a polar axis running through the longitudinal axis (6D) of the outer section (6B) of the tine carrier (6A, 6B) and the first arm-end line (12C), and the distance from the first arm-end line (12C), increase.

4. Rake according to one of claims 1 to 3, **characterised in that**, in a viewing direction corresponding to the longitudinal direction of the outer section (6B) of the tine carrier (6A, 6B), the radial distance of a first arm-end line (12C), which is associated with a first group of arms (12A, 12B), from the longitudinal axis (6D) of the outer section of the tine carrier (6A, 6B) is significantly less than those of the other arm-end lines (13C; 14C), and **in that**, for all groups of arms (13A, 13B; 14A, 14B) with the exception of the first group (12A, 12B), owing to the respective bending of the arms (13A, 13B; 14A, 14B) the distances of the arm-end lines (13C; 14C) from the first arm-end line (12C) are less than they would be without this bending.

5. Rake according to one of claims 1 to 4, **characterised in that**, in a viewing direction corresponding to the longitudinal direction of the outer section (6B) of the tine carrier (6B, 6D), the direction of bending defines a planned direction of rotation of the rake (5) upon lowering to the ground (11) during operation in a working rotor (1), by the fact that the end section (12B; 13B; 14B) points obliquely forwards in each case with respect to this direction of rotation.

6. Rake according to one of claims 1 to 5, **characterised in that**, in a viewing direction corresponding to the longitudinal direction of the outer section (6B) of the tine carrier (6B, 6D), the radial distance of a first arm-end line (12C), which is associated with a first group of arms (12A, 12B), from the longitudinal axis (6D) of the outer section (6B) of the tine carrier (6A, 6B) is significantly less than those of the other arm-end lines (13C; 14C), and **in that** the length ratio between the respective initial sections (12A; 13A; 14A) and end sections (12B; 13B; 14B) of the arms (12A, 12B; 13A, 13B; 14A, 14B) decreases monotonically in the same order of the groups of arms (12A, 12B; 13A, 13B; 14A, 14B) in which both the amount of the polar angle φ relative to a polar axis running through the longitudinal axis (6D) of the outer section (6B) of the tine carrier (6A, 6B) and the first arm-end line (12C), and the distance from the first arm-end line (12C), increase.

7. Rake according to one of claims 1 to 6, **characterised in that**, in the viewing direction which runs perpendicularly to the longitudinal axis (6D) of the outer section (6B) of the tine carrier (6A, 6B) and in which the length of an arm (12A, 12B; 13A, 13B; 14A, 14B) is maximal, both the initial section (12A; 13A; 14A) and the end section (12B; 13B; 14B) of the arm (12A, 12B; 13A, 13B; 14A, 14B) is at an angle to the longitudinal axis (6D) of the outer section (6B) of the tine carrier (6A, 6B), and **in that** the respective angle to this longitudinal axis (6D) is less than 90° in one case and more in the other case.

8. Rake according to one of claims 1 to 7, **characterised in that**, in the viewing direction which runs perpendicularly to the longitudinal axis (6D) of the outer section (6B) of the tine carrier (6A, 6B) and in which the length of the shortest arms (12A, 12B) is maximal, the end sections (12B; 13B; 14B) of all of the arms (12A, 12B; 13A, 13B; 14A, 14B) of the rake tines (7, 8) run at least approximately parallel to each other and areat least approximately equidistant from each other in the direction of the longitudinal axis (6D) of the outer section (6B) of the tine carrier (6A, 6B).

9. Rake according to one of claims 1 to 7, **characterised in that** the tines (7; 8) are in each case designed as double tines with a coil (17; 18) which can be attached to a tine carrier (6A, 6B) and which runs along an axis (6D), and with two arms (12A, 12B; 13A, 13B; 14A, 14B) projecting from the two axial ends of the coil (17; 18), and **in that** the rake (5) includes at least two different types of double tines which differ from each other in at least one (13A, 13B; 14A, 14B) of the two arms.

10. Rake according to claim 9, **characterised in that** it includes two different types of double tines (7; 8) which differ from each other in exactly one (13A, 13B; 14A, 14B) of the two arms (12A, 12B; 13A, 13B; 14A, 14B).

11. Rake according to claim 10, **characterised in that** the arm which is the same in both types of double tines (7; 8) is the arm (12A, 12B) of which the end in each case is at the shorter radial distance from the axis (6D) of the coil (17; 18).

12. Rake according to one of claims 9 to 11, **characterised in that** the different types of double tines (7; 8) are arranged in a periodically alternating order along the outer section (6B) of the tine carrier (6A, 6B).

13. Rake according to one of claims 9 to 11, **characterised in that** the different types of double tines (7; 8) are distributed between different regions of the outer section (6B) of the tine carrier (6A, 6B) succeeding each other in the longitudinal direction, wherein only double tines (7 or 8) of a single type are arranged in each one of these regions.

## Revendications

1. Râteau (5) pour une andaineuse gyroscopique, comprenant un porte-dents (6A, 6B), qui présente une portion extérieure (6B) s'étendant le long d'un axe (6D), au niveau de laquelle une pluralité de dents de râtelage (7 ; 8) sont fixées les unes à côté des autres selon un agencement en forme de rangées par des branches (12A, 12B ; 13A, 13B ; 14A, 14B) dépassant respectivement de la portion extérieure (6B) du porte-dents (6A, 6B), dans lequel les dents de râtelage (7 ; 8) présentent au moins trois groupes différents de branches (12A, 12B ; 13A, 13B ; 14A, 14B), dont les extrémités libres à l'intérieur de chaque groupe individuel se trouvent au moins approximativement sur une ligne droite s'étendant de manière parallèle par rapport à l'axe longitudinal (6D) de la portion extérieure (6B) du porte-dents (6A, 6B) et définissent ainsi une ligne d'extrémité de branche (12C ; 13C ; 14C) associée au groupe de branches respectif, et dans lequel dans une direction d'observation correspondant à la direction longitudinale de la portion extérieure (6B) du porte-dents, les lignes d'extrémité de branche (12C ; 13C ; 14C) des différents groupes de branches (12A, 12B ; 13A, 13B ; 14A, 14B) présentent au moins tous des angles polaires ϕ différents les uns des autres par rapport à un axe polaire (15) s'étendant à travers l'axe longitudinal (6D) de la portion extérieure (6B) du porte-dents (6A, 6B), dans lequel dans une direction d'observation correspondant à la direction longitudinale de la portion extérieure (6B) du porte-dents (6A, 6B), les branches (12A, 12B ; 13A, 13B ; 14A, 14B) des dents de râtelage (7 ; 8) présentent respectivement une portion de début (12A ; 13A ; 14A) dépassant de la portion extérieure (6B) du porte-dents (6A ; 6B) au moins de manière approximativement radiale ou de manière tangentielle et une portion d'extrémité (12B ; 13B ; 14B) coudée par rapport à la portion de début, dans lequel la direction du coude est pour tous les groupes de branches (12A, 12B ; 13A, 13B ; 14A, 14B) identique, dans lequel l'angle du coude est, au sein de chaque groupe, identique, **caractérisé en ce**
**que** dans la direction d'observation s'étendant de manière perpendiculaire par rapport à l'axe longitudinal (6D) de la portion extérieure (6B) du porte-dents (6A, 6B), dans laquelle précisément la longueur d'une branche (12A, 12B ; 13A, 13B ; 14A, 14B) est maximale, la portion d'extrémité (12B ; 13B ; 14B) de la branche (12A, 12B ; 13A, 13B ; 14A, 14B) est coudée par rapport à la portion de début (12A ; 13A ; 14A).

2. Râteau selon la revendication 1, **caractérisé en ce que** dans une direction d'observation correspondant à la direction longitudinale de la portion extérieure (6B) du porte-dents (6A, 6B), les lignes d'extrémité de branche (12C ; 13C ; 14C) des différents groupes de branches (12A, 12B ; 13A, 13B ; 14A, 14B) présentent au moins en partie des distances radiales différentes les unes des autres par rapport à l'axe longitudinal (6D) de la portion extérieure (6B) du porte-dents (6A, 6B).

3. Râteau selon la revendication 1 ou 2, **caractérisé en ce que** dans une direction d'observation correspondant à la direction longitudinale de la portion extérieure (6B) du porte-dents (6A, 6B), la distance radiale d'une première ligne d'extrémité de branche (12C), qui est associée à un premier groupe de branches (12A, 12B), par rapport à l'axe longitudinal (6D) de la portion extérieure (6B) du porte-dents (6A, 6B) est de manière significative inférieure aux distances des lignes d'extrémité de branche (13C ; 14C) restantes, et **en ce que** les distances radiales des lignes d'extrémité de branche (13C ; 14C) restantes par rapport à l'axe longitudinal (6D) de la portion extérieure (6B) du porte-dents (6A, 6B) augmentent de manière monotone dans l'ordre des groupes de branches (12A, 12B ; 13A, 13B ; 14A, 14B), dans lequel précisément aussi bien la valeur de l'angle polaire ϕ par rapport à un axe polaire s'étendant à travers l'axe longitudinal (6D) de la portion extérieure (6B) du porte-dents (6A, 6B) et à travers la première ligne d'extrémité de branche (12C) tout comme la distance par rapport à la première ligne d'extrémité de branche (12C) augmentent.

4. Râteau selon l'une quelconque des revendications 1 à 3, **caractérisé en ce que** dans une direction d'observation correspondant à la direction longitudinale de la portion extérieure (6B) du porte-dents (6A, 6B), la distance radiale d'une première ligne d'extrémité de branche (12C), qui est associée à un premier groupe de branches (12A, 12B), par rapport à l'axe longitudinal (6D) de la portion extérieure du porte-dents (6A, 6B) est de manière significative inférieure aux distances des lignes d'extrémité de branche (13C ; 14C) restantes, et **en ce que** pour tous les groupes de branches (13A, 13B ; 14A, 14B), à l'exception du premier (12A, 12B), les distances des lignes d'extrémité de branche (13C ; 14C) par rapport à la première ligne d'extrémité de branche (12C) sont inférieures suite aux coudes respectifs des branches (13A, 13B ; 14A, 14B) à ce qu'elles seraient sans ces coudes.

5. Râteau selon l'une quelconque des revendications 1 à 4, **caractérisé en ce que** dans une direction d'observation correspondant à la direction longitudinale de la portion extérieure (6B) du porte-dents (6B, 6D), la direction des coudes définit une direction de rotation prévue du râteau (5) lors de l'abaissement en direction du sol (11) au cours du fonctionnement dans un périmètre de travail (1) **en ce que** la portion d'extrémité (12B ; 13B ; 14B) pointe de manière oblique vers l'avant respectivement par rapport à ladite direction de rotation.

6. Râteau selon l'une quelconque des revendications 1 à 5, **caractérisé en ce que** dans une direction d'observation correspondant à la direction longitudinale de la portion extérieure (6B) du porte-dents (6B, 6D), la distance radiale d'une première ligne d'extrémité de branche (12C), qui est associée à un premier groupe de branches (12A, 12B), par rapport à l'axe longitudinal (6D) de la portion extérieure (6B) du porte-dents (6A, 6B) est de manière significative inférieure aux distances des lignes d'extrémité de branche (13C ; 14C) restantes, et **en ce que** le rapport de longueur entre les portions de début (12A ; 13A ; 14A) respectives et les portions d'extrémité (12B ; 13B ; 14B) des branches (12A, 12B ; 13A, 13B ; 14A, 14B) diminue de manière monotone dans l'ordre des groupes de branches (12A, 12B ; 13A, 13B ; 14A, 14B), dans lequel précisément aussi bien la valeur de l'angle polaire ϕ par rapport à un axe polaire s'étendant à travers l'axe longitudinal (6D) de la portion avant (6B) du porte-dents (6A, 6B) et à travers la première ligne d'extrémité de branche (12C), que la distance par rapport à la première ligne d'extrémité de branche (12C) augmentent.

7. Râteau selon l'une quelconque des revendications 1 à 6, **caractérisé en ce que** dans la direction d'observation s'étendant précisément de manière perpendiculaire par rapport à l'axe longitudinal (6D) de la portion extérieure (6B) du porte-dents (6A, 6B), dans laquelle la longueur d'une branche (12A, 12B ; 13A, 13B ; 14A, 14B) est maximale, aussi bien que la portion de début (12A ; 13A ; 14A) que la portion d'extrémité (12B ; 13B ; 14B) de la branche (12A, 12B ; 13A, 13B ; 14A, 14B) est à l'oblique par rapport à l'axe longitudinal (6D) de la portion extérieure (6B) du porte-dents (6A, 6B), et **en ce que** l'angle respectif par rapport audit axe longitudinal (6D) est dans un cas inférieur et dans l'autre cas supérieur à 90°.

8. Râteau selon l'une quelconque des revendications 1 à 7, **caractérisé en ce que** dans la direction d'observation s'étendant de manière perpendiculaire par rapport à l'axe longitudinal (6D) de la portion extérieure (6B) du porte-dents (6A, 6B), dans laquelle précisément la longueur des branches (12A, 12B) les plus courtes est maximale, les portions d'extrémité (12B ; 13B ; 14B) de toutes les branches (12A, 12B ; 13A, 13B ; 14A, 14B) de dents de râtelage (7, 8) s'étendent au moins approximativement de manière parallèle les unes par rapport aux autres et se trouvent au moins approximativement à équidistance en direction de l'axe longitudinal (6D) de la portion extérieure (6B) du porte-dents (6A, 6B).

9. Râteau selon l'une quelconque des revendications 1 à 7, **caractérisé en ce que** les dents (7 ; 8) sont réalisées respectivement sous la forme de doubles dents comprenant un enroulement (17 ; 18) pouvant être fixé au niveau d'un porte-dents (6A, 6B), s'étendant le long d'un axe (6D) et deux branches (12A, 12B ; 13A, 13B ; 14A, 14B) dépassant des deux extrémités axiales de l'enroulement (17 ; 18), et **en ce que** le râteau (5) contient au moins deux types différents de doubles dents, qui se distinguent les uns des autres en au moins une (13A, 13B ; 14A, 14B) des deux branches.

10. Râteau selon la revendication 9, **caractérisé en ce qu'**il contient deux types différents de doubles dents (7 ; 8), qui se distinguent l'un de l'autre en exactement une (13A, 13B ; 14A, 14B) des deux branches (12A, 12B ; 13A, 13B ; 14A, 14B).

11. Râteau selon la revendication 10, **caractérisé en ce que** la même branche identique pour deux types de doubles dents (7 ; 8) est la branche (12A, 12B), dont précisément l'extrémité présente respectivement la distance radiale plus petite par rapport à l'axe (6D) de l'enroulement (17 ; 18).

12. Râteau selon l'une quelconque des revendications 9 à 11, **caractérisé en ce que** les différents types de doubles dents (7 ; 8) sont disposés selon un ordre en alternance périodique le long de la portion extérieure (6B) du porte-dents (6A, 6B).

13. Râteau selon l'une quelconque des revendications 9 à 11, **caractérisé en ce que** les différents types de doubles dents (7 ; 8) sont répartis sur différentes zones, se suivant les unes les autres dans la direction longitudinale, de la portion extérieure (6B) du porte-dents (6A, 6B), dans lequel exclusivement des doubles dents (7 ou 8) d'un unique type sont disposées dans chacune desdites zones individuelles.
